# FASCICULE DE BREVET EUROPEEN

(11) **EP 0 711 938 B1**
(45) Date de publication et mention de la délivrance du brevet: **26.01.2000**
(21) Numéro de dépôt: 95402485.7
(22) Date de dépôt: 07.11.1995
(51) Int. Cl.: F16J 15/08

(54) **Joint statique métallique en V et assemblage étanche**
Statische V-förmige, metallische Dichtung und abgedichtete Vorrichtung
Static V-shaped metallic seal and sealed assembly

(30) Priorité: 10.11.1994 FR 9413533
(43) Date de publication de la demande: 15.05.1996
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Gromkyo, Boris Mikhilovitch, Khimky, région de Moscou (RU); Mikhalev, Igor Alexandrovitch, Moscou (RU); Postnikov, Ivan Denisovitch, Khimky, région de Moscou (RU); Matveev, Evgeny Mikhailovitch, Khimky, région de Moscou (RU)
(74) Mandataire: Thévenet, Jean-Bruno

(56) Documents cités:
- EP-A- 0 241 350
- GB-A- 2 259 121
- US-A- 3 161 318
- US-A- 3 207 524
- US-A- 3 345 078

## Description

### Domaine de l'invention

L'invention concerne les joints d'étanchéité, en particulier les joints statiques métalliques en V à voiles élastiques, ainsi que les raccords et assemblages étanches utilisant de tels joints.

L'invention se rapporte plus particulièrement à un joint statique métallique en V comprenant une partie annulaire formant talon semi-rigide et légèrement flexible de manière à pouvoir se déformer et assurer une première zone de contact, et des premier et second voiles raccordés latéralement au talon et s'étendant transversalement par rapport à l'axe du joint, le joint présentant, en demi-coupe axiale, la forme d'un V symétrique couché, les surfaces coniques des branches du V présentant une élasticité telle que par flexion des surfaces coniques des branches du V, les extrémités de ces surfaces assurent une deuxième zone de contact qui constitue des barrières d'étanchéité.

### Art antérieur

On connaît déjà différents types de joints constituant des éléments séparés destinés à être incorporés dans des assemblages ou raccords fixes en vue d'assurer l'étanchéité de ces assemblages ou raccords. Ces joints peuvent être en particulier plats, toriques, en forme de V et peuvent être soit métalliques, soit en matériau élastomère ou similaire, soit constitués de façon mixte à partir de métal et de matière plastique.

Les différents types de joints connus répondent à certaines conditions de fonctionnement mais ne sont pas entièrement satisfaisants en ce qui concerne le coût de fabrication, la qualité mécanique et la fiabilité ou la longévité, en particulier lorsqu'il s'agit d'une utilisation dans des conditions de fonctionnement extrêmes, notamment sous haute pression et dans des plages de température très élevées ou au contraire très basses.

Les joints statiques réalisés en matériau élastomère ou similaire sont bon marché mais possèdent une durée de vie limitée.

Les joints statiques métalliques connus présentent de meilleures caractéristiques du point de vue des performances et de la durée de vie, mais sont en général plus coûteux à fabriquer.

On a déjà proposé de réaliser des joints statiques métalliques comportant des voiles rattachés à un talon et définissant un profil en V.

De façon plus particulière, le document EP-A-0 241 350 a déjà proposé de réaliser un joint statique métallique en V présentant une première zone d'étanchéité au niveau du talon semi-rigide et une deuxième zone d'étanchéité au niveau des extrémités libres des branches du V. Un tel joint métallique, par les deux zones d'étanchéité créées et le raccordement progressif des voiles au talon, a permis une certaine amélioration des performances.

Un tel type de joint conserve cependant des dimensions importantes dans le sens radial et le sens axial et par suite implique la mise en oeuvre de raccords de masse importante. De plus, lorsque des forces de tension externes très élevées agissent sur les voiles du joint et lorsque les efforts sont augmentés sous l'effet de vibrations, le fonctionnement ne conserve pas toute la fiabilité voulue.

### Objet et description succincte de l'invention

L'invention vise à remédier aux inconvénients précités et à réaliser un joint statique qui présente des dimensions optimisées aussi bien dans le sens radial que dans le sens axial, qui offre une restitution élastique accrue et permette la réalisation d'assemblages et raccords plus légers mettant en oeuvre des brides légères et relativement peu rigides.

L'invention vise ainsi à réaliser des joints statiques et des raccords étanches de masse réduite relativement peu coûteux et présentant d'excellentes qualités sur les plans de la résistance mécanique et de la résistance aux agressions dans des conditions sévères de température, de pression, de vibrations et d'agression chimique.

Ces buts sont atteints grâce à un joint statique métallique en V comprenant une partie annulaire formant talon semi-rigide et légèrement flexible de manière à pouvoir se déformer et assurer une première zone de contact, et des premier et second voiles raccordés latéralement au talon et s'étendant transversalement par rapport à l'axe du joint, le joint présentant, en demi-coupe axiale, la forme d'un V symétrique couché, les surfaces coniques des branches du V présentant une élasticité telle que par flexion des surfaces coniques des branches du V, les extrémités de ces surfaces assurent une deuxième zone de contact constituant des barrières d'étanchéité, caractérisé en ce que les surfaces coniques extérieures, suivant une direction axiale, des branches du V présentent un angle α compris entre 40° et 50° par rapport aux surfaces frontales extérieures planes du talon qui sont perpendiculaires à l'axe XX' du joint, en ce que les surfaces coniques intérieures, suivant une direction axiale, des branches du V définissent un angle β supérieur à l'angle α, mais voisin de celui-ci, avec un plan de symétrie YY' perpendiculaire à l'axe XX' du joint, et en ce que la hauteur h des branches du V mesurée selon le plan de symétrie YY' entre le talon et les extrémités libres de ces branches est comprise entre 0,5 et 0,8 fois la distance L selon l'axe XX' du joint entre les extrémités libres des branches du V.

De préférence, les surfaces extérieures des extrémités libres des branches du V définissent des renflements au niveau des barrières d'étanchéité.

L'invention concerne également un assemblage ou raccord étanche à brides optimisé pour recevoir un joint statique en V selon l'invention.

Un tel assemblage étanche comprenant des première et deuxième brides définissant entre elles un logement de joint et venant en contact l'une avec l'autre par des faces planes perpendiculaires à l'axe XX' de l'assemblage, et un joint statique métallique disposé dans ledit logement de joint en présentant un plan de symétrie YY' perpendiculaire audit axe XX' est caractérisé en ce qu'il comprend un joint statique métallique en V de dimensions réduites selon l'invention tel que défini plus haut, en ce que ledit logement de joint présente, dans un plan perpendiculaire audit plan de symétrie YY' du joint et contenant l'axe XX' de l'assemblage, une section ayant la forme d'un trapèze isocèle, les surfaces obliques du logement de joint qui coopèrent avec les surfaces coniques extérieures des branches du V étant inclinées d'un angle γ par rapport à l'axe XX' de l'assemblage, dans un sens correspondant à celui des branches du V du joint, en ce que le joint en V est placé dans le logement de joint et centré dans celui-ci de telle manière que la surface cylindrique extérieure du talon semi-rigide du joint soit placée contre la surface cylindrique définissant la petite base dudit trapèze, avec un jeu minimal, et que les extrémités libres des branches du V présentent elles-mêmes au repos un jeu réduit par rapport aux surfaces obliques du logement de joint, de telle sorte qu'en fonctionnement le joint soit en contact avec le logement de joint d'une part le long de l'axe de symétrie du talon annulaire semi-rigide et d'autre part au niveau des extrémités libres le cas échéant munies de renflements, des branches du V.

De préférence, les surfaces obliques d'étanchéité du logement de joint présentent par rapport à l'axe XX' de l'assemblage un angle d'inclinaison γ compris entre 50° et 60°, choisi de manière à optimiser les forces axiales et radiales aux points de contact avec les extrémités libres des branches du joint en V.

A titre d'exemple, les première et deuxième brides peuvent être reliées entre elles à l'aide d'éléments de liaison tels que des boulons, des vis ou des goujons.

Toutefois, l'assemblage étanche selon l'invention peut également constituer un raccord-union. Dans ce cas, l'une des première et deuxième brides comporte un filetage avec lequel coopère un écrou d'accouplement comportant un talon venant appliquer l'autre bride contre la bride filetée.

Le joint statique métallique selon l'invention peut comprendre une âme entièrement métallique ainsi qu'au moins un revêtement extérieur constitué notamment par l'un des matériaux suivant : PTFE, or, argent, cuivre, nickel.

L'invention n'est pas limitée à une configuration particulière.

Ainsi, selon un mode de réalisation, le talon constitue une partie annulaire extérieure et les branches du V sont tournées vers l'axe XX' du joint .

Selon un autre mode de réalisation, le talon constitue une partie annulaire intérieure et les branches du V sont tournées vers l'extérieur.

Grâce à l'invention, notamment aux caractéristiques dimensionnelles particulières du joint qui permettent de réduire la hauteur des voiles, tout en conservant deux zones d'étanchéité, et à la réalisation d'un siège de joint de forme trapézoïdale avec des jeux garantis entre les faces annulaires, les surfaces des branches du joint en V et les surfaces coniques du siège, il est possible de préserver la flexibilité des voiles du joint et leur contact avec le siège de joint de façon à augmenter l'effet d'auto-étanchéité et assurer une fiabilité de l'assemblage étanche même sous l'action de grands efforts de traction exercés sur les brides. Ceci permet d'utiliser des brides de rigidité moins grande et donc de réaliser des assemblages de dimensions réduites, notamment dans le sens radial, et de masse moins importante tout en bénéficiant d'une grande fiabilité même en présence de conditions sévères de fonctionnement.

L'invention s'applique ainsi à des assemblages ou raccords étanches démontables aussi bien pour des installations terrestres que pour des applications spatiales où les températures de l'environnement peuvent aller jusqu'à des hautes températures de par exemple environ 800°C ou au contraire descendre jusqu'à des températures cryogéniques de l'ordre de - 253°C, avec des hautes pressions pouvant aller par exemple jusqu'à environ 50 M Pa.

### Brève description des dessins

D'autres caractéristiques et avantages de l'invention ressortiront de la description suivante de modes particuliers de réalisation, en référence aux dessins annexés, sur lesquels ;
- la figure 1 est une vue en demi-coupe axiale d'un premier mode de réalisation de joint métallique en V conforme à l'invention,
- la figure 2 est une vue en demi-coupe axiale d'un assemblage étanche à liaison par boulon, équipé d'un joint métallique en V selon la figure 1,
- la figure 3 est une vue en demi-coupe axiale d'un assemblage étanche de type à raccord-union, équipé d'un joint métallique en V selon la figure 1,
- la figure 4 est une vue en demi-coupe axiale d'un second mode de réalisation d'un joint métallique en V selon l'invention, et
- la figure 5 est une vue en demi-coupe axiale d'un assemblage étanche de type à raccord-union, équipé d'un joint métallique en V selon la figure 4.

### Description détaillée de modes particuliers de réalisation

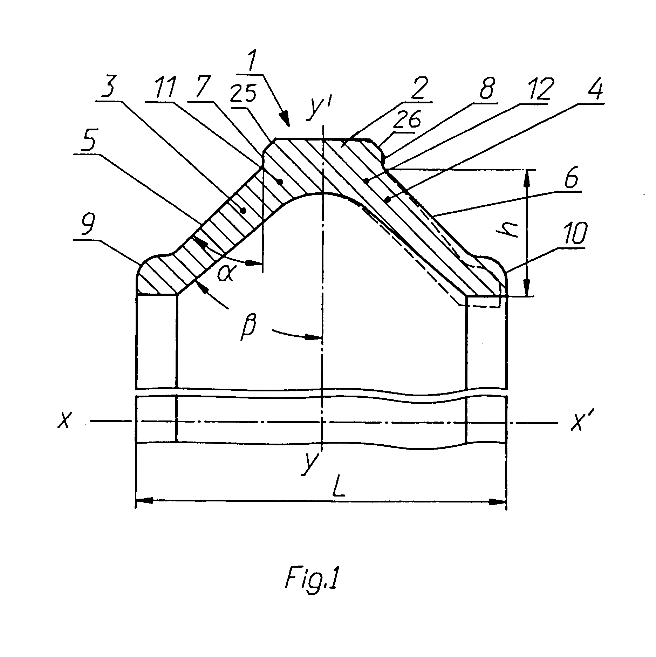

On voit sur la figure 1 un premier mode de réalisation de joint métallique à configuration en V conforme à l'invention. Un tel joint 1 présente un axe de symétrie XX' et un plan de symétrie YY' lui-même perpendiculaire à l'axe de symétrie XX'. Le joint 1 comprend essentiellement un talon annulaire semi-rigide 2 capable de se déformer légèrement pour assurer une première zone de contact et deux voiles 3, 4 essentiellement coniques qui prennent naissance au niveau du talon 2 et s'étendent vers l'extérieur par rapport au talon 2 comme on peut le voir sur la figure 1.

Les surfaces externes coniques 5, 6 des voiles 3, 4 sont inclinées d'un angle α compris entre 40° et 50° par rapport aux faces planes 7, 8 du talon annulaire 2 qui sont elles-mêmes perpendiculaires à l'axe XX' du joint 1. Les faces planes 7, 8 du talon 2 peuvent être raccordées à la surface cylindrique périphérique externe du talon 2 par des chanfreins 25, 26.

Les surfaces internes des voiles 3, 4 sont inclinées d'un angle β par rapport au plan de symétrie YY' du joint 1. L'angle β est supérieur à l'angle α mais présente une valeur voisine de ce dernier.

Les extrémités libres des voiles flexibles 3, 4 qui, par leur contact avec un siège de joint, assurent la fonction de barrières d'étanchéité, présentent avantageusement des renflements de contact 9, 10 de forme torique réalisés sur les surfaces extérieures des voiles 3, 4.

La valeur de l'angle α (40° à 50°) a été déterminée de manière à optimiser les dimensions du joint 1 à la fois dans les directions radiale YY' et axiale XX'.

Le joint 1 présente, en demi-coupe axiale, la forme d'un V symétrique couché, les branches du V étant constituées par les voiles coniques 3, 4.

La hauteur h des branches 3, 4 du V, mesurée selon le plan de symétrie YY', est définie comme la distance, sur une ligne droite perpendiculaire à l'axe XX', entre les zones 11, 12 au niveau desquelles les branches 3, 4 sont rattachées aux faces planes 7, 8 du talon 2, et les extrémités renflées toriques 9, 10 des branches 3, 4. La hauteur h est comprise entre 0,5 et 0,8 fois la distance L selon l'axe XX' du joint 1 entre les surfaces extérieures extrêmes des renflements 9, 10 ou des extrémités libres des branches 3, 4 (figure 1).

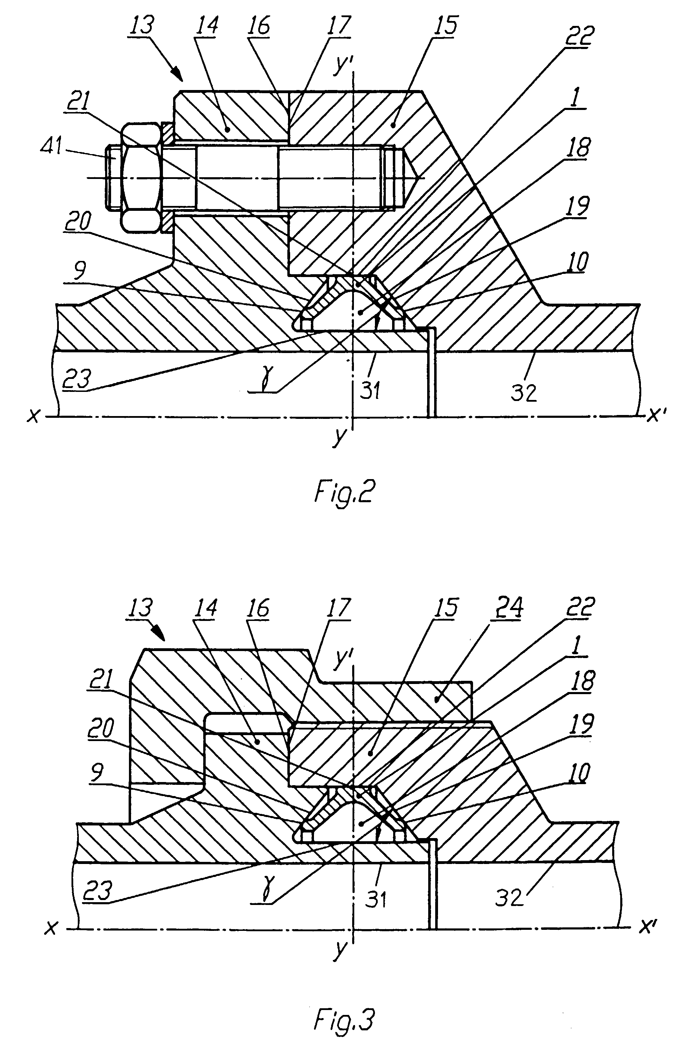

A l'état de repos, les faces planes 7, 8 du talon semi-rigide 2 sont perpendiculaires à l'axe XX'. Lorsque le joint 1 est en service, les voiles flexibles 3, 4 et le talon annulaire semi-rigide 2 se courbent légèrement vers le plan de symétrie YY' et prennent une position telle que celle représentée en pointillés pour la branche 4 sur la figure 1. En service, le joint présente des zones de contact d'étanchéité sur les surfaces externes des renflements 9, 10 et une zone de contact supplémentaire 21 (figures 2 et 3) au niveau du talon semi-rigide 2 selon le plan de symétrie YY'.

Le joint symétrique 1 en V selon l'invention permet ainsi d'obtenir une première zone de contact au niveau du talon annulaire semi-rigide 2 au voisinage du plan de symétrie YY' par une dilatation du talon 2, et des secondes zones de contact avec barrières d'étanchéité au niveau des extrémités 9, 10 des voiles flexibles 3, 4. Les dimensions particulières du joint, et notamment le choix de l'angle α et de la hauteur h, permettent d'obtenir un joint 1 dont les dimensions sont minimales à la fois radialement et axialement.

Le joint 1 en V est entièrement métallique. Toutefois, ce joint peut être recouvert de divers revêtements, tels que notamment du polytétrafluoroéthylène (PTFE), de l'or, de l'argent, du cuivre, du nickel, en fonction des conditions d'utilisation requises.

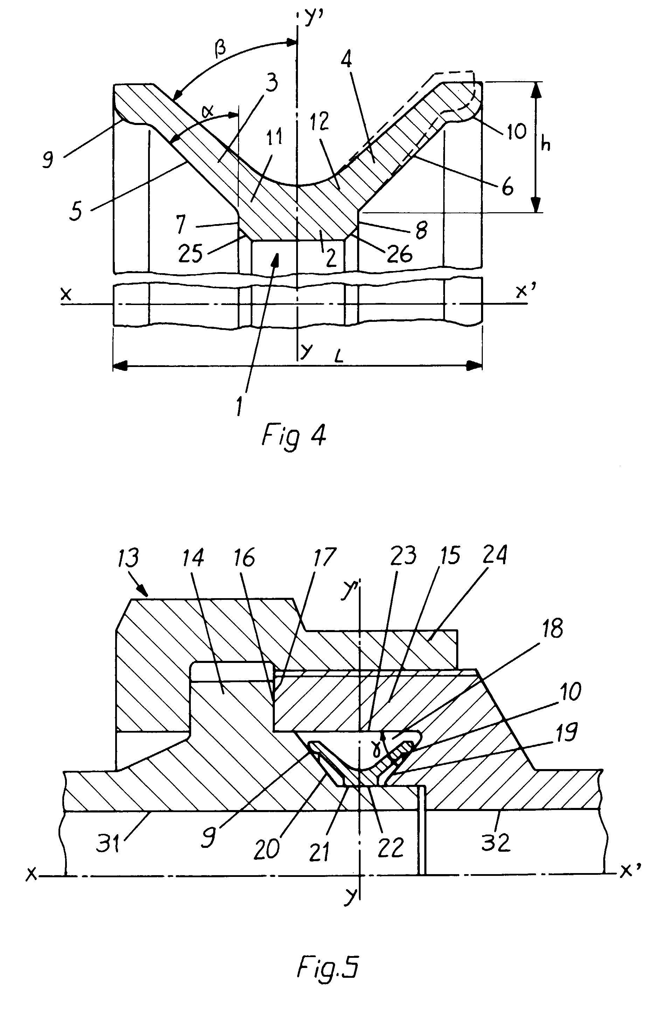

Dans le joint 1, le talon 2 peut constituer une partie annulaire extérieure tandis que les branches 3, 4 du V sont tournées vers l'axe du joint XX', comme représenté sur la figure 1. Toutefois, le joint 1 peut aussi être réalisé comme selon la figure 4, avec un talon 2 constitué par une partie annulaire intérieure et des branches 3, 4 du V tournées vers l'extérieur. Hormis cette inversion du sens du V, le joint 1 de la figure 4 est identique à celui de la figure 1 et les éléments constitutifs semblables portent les mêmes références sur les figures 1 et 4.

On décrira maintenant des exemples d'assemblages ou raccords étanches selon l'invention qui permettent d'utiliser au mieux les propriétés du joint en V précédemment décrit.

La figure 2 montre un premier exemple d'assemblage étanche à brides comprenant un logement annulaire 18 dans lequel est disposé un joint 1 conforme à la description précédente.

L'assemblage étanche 13 de la figure 2 comprend deux brides 14, 15 solidaires de deux tronçons de canalisation 31, 32, qui sont en contact selon des surfaces planes 16, 17 et sont assemblées à l'aide de boulons de vis ou de goujons 41, un logement de joint 18 formé entre les brides 14 et 15 et un joint métallique 1 en V conforme à l'invention.

Le logement annulaire de joint 18 présente, en section selon un plan contenant l'axe XX' des tronçons de canalisation 31, 32 de l'assemblage 13, une forme trapézoïdale et non pas rectangulaire. Le logement de joint 18 est ainsi délimité d'une part par des surfaces cylindriques 22, 23 et d'autre part par des surfaces coniques 19, 20 qui sont inclinées par rapport à l'axe XX' de l'assemblage.

L'angle γ d'inclinaison des surfaces coniques 19, 20 par rapport à l'axe XX' est compris entre 50° et 60°, c'est-à-dire est un peu supérieur à l'angle d'inclinaison des surfaces coniques extérieures des voiles du joint 1 par rapport à l'axe XX'.

Le joint métallique 1 en V est placé dans le logement 18 avec un jeu de montage minimal entre la surface cylindrique 22 du logement 18 et la surface cylindrique 21 du talon semi-rigide 2 qui est située du côté de cette surface cylindrique 22 définissant la petite base du trapèze isocèle formé par la section du logement 18. Le joint 1 est également monté de telle manière que les surfaces toriques d'extrémité 9, 10 des voiles 3, 4 soient en contact d'étanchéité avec les surfaces inclinées 19, 20 du logement 18.

La géométrie particulière du logement 18 en forme de trapèze isocèle, et les paramètres définissant la géométrie du joint 1 en V coopèrent pour interagir et définir un assemblage étanche dont la masse et les dimensions radiales sont minimisées.

Le fonctionnement du raccord étanche selon la figure 2 est le suivant.

Lors du serrage des boulons, vis ou goujons 41 de l'assemblage 13, les brides 14, 15 viennent en butée par leurs faces planes 16, 17 perpendiculaires à l'axe XX'. Pour assurer une étanchéité jusqu'au niveau de pression du fluide pour lequel l'effet d'auto-étanchéité commence de se produire, le joint 1 est mis en contact avec les surfaces obliques 19, 20 par ses extrémités libres renflées 9, 10, la pression de contact requise étant assurée par la dilatation du talon annulaire semi-rigide 2 associée à la légère flexion des voiles élastiques 3, 4.

Après ce positionnement, les voiles flexibles 3, 4 et le talon annulaire semi-rigide 2 sont légèrement courbés par rapport au plan de symétrie YY' du logement 18 et du joint 1 (position en pointillés de la figure 1), d'où il résulte que le talon semi-rigide 2 , n'est en contact avec la surface cylindrique 22 du logement 18 que selon le plan de symétrie YY'. Ceci contribue à augmenter la longueur effective des voiles 3, 4 et leur efficacité.

Le choix d'un angle α optimisé (40° à 50°) pour l'inclinaison des voiles coniques d'étanchéité 3, 4 par rapport au plan de symétrie YY', associé à un angle γ adapté (50° à 60°) pour l'inclinaison des surfaces d'étanchéité coniques 19, 20 par rapport à l'axe XX' de l'assemblage permet un fonctionnement sûr du joint 1 qui avec une faible dimension axiale garantit une déflexion adéquate dans le sens radial. Lorsque l'assemblage est chargé par la haute pression du fluide de travail circulant dans les tronçons de canalisation 31, 32, les extrémités renflées 9, 10 des voiles 3, 4 peuvent se courber de façon correcte dans les directions axiale et radiale, par rapport au plan de symétrie du joint et la pression de contact ne peut pas disparaître.

On a représenté sur la figure 3 un autre exemple d'assemblage étanche conforme à l'invention. Selon ce mode de réalisation de la figure 3, l'assemblage constitue un raccord de type union. Ainsi, la bride 15 comporte un filetage avec lequel coopère un écrou d'accouplement 24 comportant lui-même un talon venant appliquer l'autre bride 14 contre la bride filetée, les brides 14 et 15 étant en contact l'une avec l'autre selon des faces planes 16, 17 perpendiculaires à l'axe XX' de l'assemblage comme dans le cas de la figure 2.

Les pièces 14 et 15 définissent un logement de joint annulaire 18 dont la section présente une forme de trapèze isocèle comme dans le cas du mode de réalisation de la figure 2 et un joint 1 en V coopère avec le logement de joint trapézoïdal 18 d'une façon identique à ce qui a été décrit en référence à la figure 2. Ces éléments ne seront donc pas décrits à nouveau.

On peut noter que les assemblages de type raccord-union tels que ceux de la figure 3 peuvent présenter une dimension radiale réduite et donc une masse corrélativement réduite par rapport à des assemblages à bride tels que ceux de la figure 2, notamment pour des canalisations de diamètre inférieur à environ 36 mm.

La figure 5 montre un assemblage 13 de type raccord-union semblable à celui de la figure 3, mais dans lequel il est prévu de réaliser le vide à l'intérieur des tronçons de canalisation 31, 32, ou d'y faire circuler un fluide à une pression inférieure à celle de l'environnement ambiant. Dans ce cas, le logement de joint 18, qui présente toujours une section ayant la forme d'un trapèze isocèle, possède une configuration inversée par rapport à celle de la figure 3, c'est-à-dire que la petite base 22 du trapèze isocèle est située du côté le plus proche de l'intérieur de la canalisation 31, 32 tandis que la grande base 23 du trapèze isocèle est située du côté du raccord-union. Le joint 1 en V est également inversé par rapport à celui de la figure 3 et correspond au mode de réalisation de la figure 4.

Le fonctionnement reste similaire à celui décrit en référence à la figure 3, la différence de pression entre l'extérieur et l'intérieur de la canalisation 31, 32 tendant, en service, à plaquer les voiles du joint 1 contre les surfaces obliques 9, 10 des pièces 14, 15.

Dans le cas où la pression dans la canalisation 31, 32 est inférieure à la pression externe, il est naturellement également possible de réaliser un assemblage à brides boulonnées vissées ou goujonnées à configuration inversée du logement de joint 18, avec un joint 1 en V tel que celui de la figure 4, qui serait dérivé de la configuration de la figure 2 de la même manière que la configuration de la figure 5 est déduite de celle de la figure 3, c'est-à-dire par un simple changement d'orientation du logement de joint trapézoïdal 18.

## Revendications

1. Joint statique métallique en V comprenant une partie annulaire (2) formant talon semi-rigide et légèrement flexible de manière à pouvoir se déformer et assurer une première zone de contact, et des premier et second voiles (3, 4) raccordés latéralement au talon (2) et s'étendant transversalement par rapport à l'axe du joint (1), le joint présentant, en demi-coupe axiale, la forme d'un V symétrique couché, les surfaces coniques (5, 6) des branches (3, 4) du V présentant une élasticité telle que par flexion des surfaces coniques (5, 6) des branches du V, les extrémités de ces surfaces assurent une deuxième zone de contact qui constitue des barrières d'étanchéité,
caractérisé en ce que les surfaces coniques extérieures (5,6), suivant une direction axiale, des branches (3,4) du V présentent un angle α compris entre 40° et 50° par rapport aux surfaces frontales extérieures planes (7, 8) du talon (2) qui sont perpendiculaires à l'axe XX' du joint (1), en ce que les surfaces coniques intérieures, suivant une direction axiale, des branches (3, 4) du V définissent un angle β supérieur à l'angle α, mais voisin de celui-ci, avec un plan de symétrie YY' perpendiculaire à l'axe XX' du joint, et en ce que la hauteur h des branches (3,4) du V mesurée selon le plan de symétrie YY' entre le talon (2) et les extrémités libres de ces branches (3,4) est comprise entre 0,5 et 0,8 fois la distance L selon l'axe XX' du joint (1) entre les extrémités libres des branches (3, 4) du V.

2. Joint statique selon la revendication 1, caractérisé en ce que les surfaces extérieures des extrémités libres des branches (3, 4) du V définissent des renflements (9, 10) au niveau des barrières d'étanchéité.

3. Joint statique selon la revendication 1 ou 2, caractérisé en ce qu'il comprend une âtre entièrement métallique ainsi qu'au moins un revêtement extérieur constitué notamment par l'un des matériaux suivant : PTFE, or, argent, cuivre, nickel.

4. Joint statique selon l'une quelconque des revendications 1 à 3, caractérisé en ce que le talon (2) constitue une partie annulaire extérieure et en ce que les branches (3, 4) du V sont tournées vers l'axe du joint XX'.

5. Joint statique selon l'une quelconque des revendications 1 à 3, caractérisé en ce que le talon (2) constitue une partie annulaire intérieure et en ce que les branches (3,4) du V sont tournées vers l'extérieur.

6. Assemblage étanche à brides, comprenant des première et deuxième brides (14, 15) définissant entre elles un logement de joint (18) et venant en contact l'une avec l'autre par des faces planes (16, 17) perpendiculaires à l'axe XX' de l'assemblage et un joint métallique (1) disposé dans ledit logement de joint (18) en présentant un plan de symétrie YY' perpendiculaire audit axe XX',
caractérisé en ce qu'il comprend un joint statique métallique (1) selon l'une quelconque des revendications 1 à 5, en ce que ledit logement de joint (18) présente, dans un plan perpendiculaire audit plan de symétrie YY' du joint (1) et contenant l'axe XX' de l'assemblage, une section ayant la forme d'un trapèze isocèle, les surfaces obliques (19, 20) du logement de joint (18) qui coopèrent avec les surfaces coniques extérieures des branches (3, 4) du V étant inclinées d'un angle γ par rapport à l'axe XX' de l'assemblage, dans un sens correspondant à celui des branches (3, 4) du V du joint (1), en ce que le joint en V (1) est placé dans le logement de joint (18) et centré dans celui-ci de telle manière que la surface cylindrique extérieure du talon semi-rigide (2) du joint (1) soit placée contre la surface cylindrique (22) définissant la petite base dudit trapèze, avec un jeu minimal, et que les extrémités libres (9, 10) des branches (3, 4) du V présentent elles-mêmes au repos un jeu réduit par rapport aux surfaces obliques (19, 20) du logement de joint (18), de telle sorte qu'en fonctionnement le joint (1) est en contact avec le logement de joint (18) d'une part le long de l'axe de symétrie (21) du talon annulaire semi-rigide (2) et d'autre part au niveau des extrémités libres (9, 10) le cas échéant munies de renflements, des branches (3, 4) du V.

7. Assemblage étanche selon la revendication 6, caractérisé en ce que les surfaces obliques d'étanchéité (19, 20) du logement de joint (18) présentent par rapport à l'axe XX' de l'assemblage un angle d'inclinaison γ compris entre 50° et 60°, choisi de manière à optimiser les forces axiales et radiales aux points de contact avec les extrémités libres (9, 10) des branches (3, 4) du joint en V (1).

8. Assemblage étanche selon la revendication 6 ou 7, caractérisé en ce que lesdites première et deuxième brides (14, 15) sont reliées entre elles à l'aide d'éléments de liaison tels que des boulons, vis ou goujons.

9. Assemblage étanche selon la revendication 6 ou 7, caractérisé en ce qu'il constitue un raccord-union, l'une (15) desdites première et deuxième brides (14, 15) comportant un filetage avec lequel coopère un écrou d'accouplement (24) comportant un talon venant appliquer l'autre bride (14) contre la bride filetée (15).

## Patentansprüche

1. Statische, V-förmige Metalldichtung, die einen ersten, kreisringförmigen Abschnitt (2), der einen halb-steifen und leicht flexiblen Steg derart bildet, daß er sich verformen und eine erste Berührungszone sicherstellen kann, und einen ersten und zweiten Flügel (3, 4) aufweist, die seitlich mit dem Steg (2) verbunden sind und sich bezüglich der Achse der Dichtung (1) in Querrichtung erstrecken, wobei die Dichtung im axialen Halbschnitt die Form eines symmetrischen, liegenden V bildet, und wobei die konischen Flächen (5, 6) der Arme (3, 4) des V eine solche Elastizität aufweisen, daß durch Biegung der konischen Flächen (5, 6) der Arme des V die Enden dieser Flächen eine zweite Berührungszone sicherstellen, die Dichtungssperren bildet,
dadurch gekennzeichnet, daß die konischen Außenflächen (5, 6), in axialer Richtung der Arme (3,4) des V, einen Winkel α aufweisen, der zwischen 40° und 50° in Bezug auf die äußeren, ebenen Frontflächen (7,8) des Steges (2) liegt, die sich senkrecht zur Achse XX' der Dichtung (1) erstrecken, daß die konischen Innenflächen, in axialer Richtung der Arme (3, 4) des V, einen Winkel β, der größer ist als der Winkel α, aber diesem nahekommt, zu einer Symmetrieebene YY' bilden, die senkrecht zur Achse XX' der Dichtung verläuft, und daß die Höhe h der Arme (3, 4) des V, in der Symmetrieebene YY' zwischen dem Steg (2) und den freien Enden dieser Arme (3, 4) gemessen, zwischen dem 0,5- und dem 0,8-fachen der Strecke L längs der Achse XX' der Dichtung (1) zwischen den freien Enden der Arme (3, 4) des V liegt.

2. Statische Dichtung nach Anspruch 1, dadurch gekennzeichnet, daß die Außenflächen der freien Enden der Arme (3, 4) des V Wülste (9, 10) auf der Höhe der Dichtungssperren bilden.

3. Statische Dichtung nach Anspruch 1 oder 2, dadurch gekennzeichnet, daß sie eine ganz aus Metall bestehende Seele und mindestens eine äußere Verkleidung aufweist, die insbesondere durch eines der folgenden Materialien gebildet ist: PTFE, Gold, Silber, Kupfer, Nickel.

4. Statische Dichtung nach irgendeinem der Ansprüche 1 bis 3, dadurch gekennzeichnet, daß der Steg (2) einen äußeren, kreisringförmigen Abschnitt bildet, und daß die Arme (3, 4) des V der Achse XX' der Dichtung zugewandt sind.

5. Statische Dichtung nach irgendeinem der Ansprüche 1 bis 3, dadurch gekennzeichent, daß der Steg (2) einen inneren, kreisringförmigen Abschnitt bildet, und daß die Arme (3, 4) des V nach außen gewandt sind.

6. Dichte Flaschverbindung mit einem ersten und zweiten Flansch (14, 15), die zwischeneinander einen Dichtungsraum (18) bilden und miteinander durch ebene Flächen (16, 17) senkrecht zur Achse XX' der Verbindung sowie durch eine Metalldichtung (1) in Berührung gelangen, die im genannten Dichtungsraum (18) angeordnet ist, wobei sie eine Symmetrieebene YY' aufweist, die senkrecht zur genannten Achse XX' verläuft,
dadurch gekennzeichnet, daß sie eine statische Metalldichtung (1) nach irgendeinem der Ansprüche 1 bis 5 aufweist, daß der genannte Dichtungsraum (18) in einer Ebene, die senkrecht zur genannten Symmetrieebene YY'der Dichtung (1) verläuft und die Achse XX' der Verbindung enthält, einen Querschnitt aufweist, der die Form eines gleichschenkligen Trapezes hat, wobei die schrägen Flächen (19, 20) des Dichtungsraumes (18), die mit den konischen Außenflächen der Arme (3, 4) des V zusammenwirken, unter einem Winkel γ in Bezug auf die Achse XX' der Verbindung in einer Richtung geneigt sind, die der der Arme (3, 4) des V der Dichtung (1) entspricht, daß die V-förmige Dichtung (1) in den Dichtungsraum (18) eingesetzt ist und in diesem derart zentriert ist, daß die zylindrische Außenoberfläche des halb-steifen Stegs (2) der Dichtung (lj gegen die zylindrische Oberfläche (22) mit minimalem Spiel anliegt ist, die die kleine Basis des genannten Trapezes bildet, und daß die freien Enden (9, 10) der Arme (3, 4) des V ihrerseits in der Ruhelage ein verringertes Spiel bezüglich der schrägen Flächen (19, 20) des Dichtungsraumes (18) derart aufweisen, daß die Dichtung (1) im Betrieb mit dem Dichtungsraum (18) einerseits längs der Symmetrieachse (21) des kreisringförmigen, halb-steifen Steges (2) und andererseits auf Höhe der freien Enden (9, 10), die gegebenenfalls mit Wülsten versehen sind, der Arme (3, 4) des V in Berührung stehen.

7. Dichte Verbindung nach Anspruch 6, dadurch gekennzeichnet, daß die schrägen Dichtungsflächen (19, 20) des Dichtungsraumes (18) in Bezug auf die Achse XX' der Verbindung einen Neigungswinkel γ aufweisen, der zwischen 50° und 60° liegt und derart gewählt ist, daß die axialen und radialen Kräfte an den Berührungspunkten mit den freien Enden (9, 10) der Arme (3, 4) der V-förmigen Dichtung (1) optimiert sind.

8. Dichte Verbindung nach Anspruch 6 oder 7, dadurch gekennzeichnet, daß der genannte erste und zweite Flansch (14, 15) miteinander mit Hilfe von Verbindungselementen wie Durchsteckschrauben, Einsteckschrauben oder Bolzen verbunden sind.

9. Dichte Verbindung nach Anspruch 6 oder 7, dadurch gekennzeichnet, daß sie eine Rohrverbindung bildet, wobei der eine Flansch (15) des genannten ersten und zweiten Flansches (14, 15) ein Gewinde aufweist, mit dem eine Koppelungsmutter (24) zusammenwirkt, die eine Endflanke aufweist, die den anderen Flansch (14) gegen den mit Gewinde versehenen Flansch (15) andrückt.

## Claims

1. Static V-shaped metallic seal comprising an annular part (2) forming a heel which is semi-rigid and slightly flexible so that it can deform and provide a first area of contact, and first and second webs (3, 4) connected laterally to the heel (2) and extending transversely with respect to the axis of the seal (1), the seal having, in axial half section, the shape of a lying-down symmetric V, the conical surfaces (5, 6) of the branches (3, 4) of the V having elasticity such that by the flexing of the conical surfaces (5, 6) of the branches of the V, the ends of these surfaces provide a second area of contact which constitutes sealing barriers,
characterized in that the exterior conical surfaces (5, 6), in an axial direction, of the branches (3, 4) of the V are at an angle α of between 40° and 50° to the planar exterior frontal surfaces (7, 8) of the heel (2) which are perpendicular to the axis XX' of the seal (1), in that the interior conical surfaces, in an axial direction, of the branches (3,4) of the V define an angle β larger than the angle α but similar to it, with a plane of symmetry YY' perpendicular to the axis XX' of the seal, and in that the height h of the branches (3, 4) of the V measured along the plane of symmetry YY' between the heel (2) and the free ends of these branches (3, 4) is between 0.5 and 0.8 times the distance L along the axis XX' of the seal (1) between the free ends of the branches (3, 4) of the V.

2. Static seal according to Claim 1, characterized in that the exterior surfaces of the free ends of the branches (3, 4) of the V define bulges (9, 10) at the sealing barriers.

3. Static seal according to Claim 1 or 2, characterized in that it has an entirely metal core and at least one exterior coating made, in particular, of one of the following materials: PTFE, gold, silver, copper, nickel.

4. Static seal according to any one of Claims 1 to 3, characterized in that the heel (2) constitutes an exterior annular part and in that the branches (3, 4) of the V are directed towards the axis of the seal XX'.

5. Static seal according to any one of Claims 1 to 3, characterized in that the heel (2) constitutes an interior annular part and in that the branches (3, 4) of the V are directed outwards.

6. Flanged sealed assembly comprising first and second flanges (14, 15) defining between them a seal housing (18) and coming into contact with each other via planar faces (16, 17) which are perpendicular to the axis XX' of the assembly and a metallic seal (1) placed in the said seal housing (18) and having a plane of symmetry YY' perpendicular to the said axis XX',
characterized in that it comprises a metallic static seal (1) according to any one of Claims 1 to 5, in that the said seal housing (18) has, in a plane perpendicular to the said plane of symmetry YY' of the seal (1) and containing the axis XX' of the assembly, a cross section in the shape of an isosceles trapezium, the oblique surfaces (19, 20) of the seal housing (18) which co-operate with the exterior conical surfaces of the branches (3, 4) of the V being inclined by an angle γ with respect to the axis XX' of the assembly, in a direction that corresponds to that of the branches (3, 4) of the V of the seal (1), in that the V-shaped seal (1) is placed in the seal housing (18) and centred therein in such a way that the exterior cylindrical surface of the semi-rigid heel (2) of the seal (1) is placed against the cylindrical surface (22) defining the short base of the said trapezium, with minimal clearance, and that the free ends (9, 10) of the branches (3, 4) of the V themselves when at rest enjoy a small amount of clearance from the oblique surfaces (19, 20) of the seal housing (18) so that in operation the seal (1) is in contact with the seal housing (18) on the one hand, along the axis of symmetry (21) of the semi-rigid annular heel (2) and, on the other hand, at the free ends (9, 10), which may be bulged, of the branches (3, 4) of the V.

7. Sealed assembly according to Claim 6, characterized in that the oblique sealing surfaces (19, 20) of the seal housing (18) are, with respect to the axis XX' of the assembly, at an angle of inclination γ of between 50° and 60° chosen so as to optimize the axial and radial forces at the points of contact with the free ends (9, 10) of the branches (3, 4) of the V-shaped seal (1).

8. Sealed assembly according to Claim 6 or 7, characterized in that the said first and second flanges (14, 15) are joined together using connecting elements such as bolts, screws or studs.

9. Sealed assembly according to Claim 6 or 7, characterized in that it consists of a union, one (15) of the said first and second flanges (14, 15) having a screw thread with which there co-operates a union nut (24) comprising a heel which presses the other flange (14) against the threaded flange (15).
